# EUROPEAN PATENT APPLICATION

(11) **EP 4 671 321 A1**
(43) Date of publication of application: **31.12.2025**
(21) Application number: 23924210.0
(22) Date of filing: 04.12.2023
(51) Int. Cl.: C08L 11/00, C08K 3/04, C08K 3/013, C08L 9/00, F16L 11/04

(54) **RUBBER COMPOSITION FOR HOSES, AND HOSE**

(30) Priority: 22.02.2023 JP 2023026641
(71) Applicant: BRIDGESTONE CORPORATION, Chuo-ku Tokyo 104-8340 (JP)
(72) Inventor: IIZUKA, Munenori, Tokyo 104-8340 (JP)
(74) Representative: Marks & Clerk LLP
(86) International application number: PCT/JP2023/043335
(87) International publication number: WO 2024/176566

(57) **Abstract**

This disclosure addresses the problem of providing a hose rubber composition excellent in processability, crack growth resistance, and elongation fatigue resistance, and a hose including such a hose rubber composition and exhibiting excellent crack growth resistance and elongation fatigue resistance. The solution is a hose rubber composition including a rubber component including at least chloroprene rubber and carbon black. The content of the chloroprene rubber is 70 parts by mass or more per 100 parts by mass of the rubber component. The chloroprene rubber has a Mooney viscosity of 43 to 53M and a crystallization initiation time at 0°C of 30 to 500 minutes. The content of the carbon black is 40 parts by mass or more and less than 50 parts by mass per 100 parts by mass of the rubber component. The carbon black has a nitrogen adsorption specific surface area (N₂SA) of 30 to 55 m²/g.

## Description

### TECHNICAL FIELD

The present disclosure relates to a hose rubber composition and a hose.

### BACKGROUND

Currently, hoses such as hydraulic hoses are widely used in machines operated by hydraulic pressure, such as construction machinery and industrial machinery. Generally, hydraulic hoses are required to withstand high pressure, to transmit driving force (pressure) accurately and quickly, and it is also important that they have high oil resistance and exhibit minimal volumetric expansion due to pressure. Furthermore, since the hydraulic oil becomes hot during machine operation, hydraulic hoses are also required to have heat resistance. The hydraulic hose typically has a laminated structure in which, from the inside, a rubber inner tube layer in contact with the hydraulic oil, a plurality of reinforcement layers for withstanding the pressure of the hydraulic oil, and a rubber outer cover layer for preventing damage to these reinforcement layers and the inner tube rubber layer are sequentially laminated, and an intermediate rubber layer is disposed between the plurality of reinforcement layers.

Usually, the reinforcement layer mainly uses metal wires subjected to brass plating, while the inner tube rubber layer, outer cover rubber layer, and intermediate rubber layer use various rubber compositions according to the required performance. Conventionally, since the rubber portions of hoses such as the inner tube rubber layer, outer cover rubber layer, and intermediate rubber layer require a wide range of rubber properties such as weather resistance, wear resistance, heat resistance, and oil resistance, a chloroprene rubber (CR)-based rubber composition with a well-balanced combination of these properties has mainly been used (see PTL 1).

### CITATION LIST

### Patent Literatures

PTL 1: JP H08-041249 A

### SUMMARY

### (Technical Problem)

The aforementioned chloroprene rubber (CR) is widely used not only for rubber products but also for other applications, so the supply-demand balance tends to be tight, and it is also expensive. Therefore, in recent years, studies have been conducted to use a more inexpensive general-purpose chloroprene rubber (CR) in the rubber composition instead of the high-grade chloroprene rubber (CR) conventionally used. However, rubber compositions using less expensive general-purpose chloroprene rubber (CR) than conventional ones are excellent in processability such as rubber kneading and extrusion, and in preventing sheet breakage during winding processing, but their crack growth resistance and elongation fatigue resistance have not been sufficient.

Accordingly, the present disclosure addresses the problem of providing a hose rubber composition excellent in processability, crack growth resistance, and elongation fatigue resistance.

Further, the present disclosure addresses the problem of providing a hose including such a hose rubber composition and exhibiting excellent crack growth resistance and elongation fatigue resistance.

### (Solution to Problem)

The gist configuration of the hose rubber composition and hose of the present disclosure for solving the above problems is as follows.
[1] A hose rubber composition comprising a rubber component including at least chloroprene rubber and carbon black,
   wherein a content of the chloroprene rubber is 70 parts by mass or more per 100 parts by mass of the rubber component,
   wherein the chloroprene rubber has a Mooney viscosity of 43 to 53M and a crystallization initiation time at 0°C of 30 to 500 minutes,
   wherein a content of the carbon black is 40 parts by mass or more and less than 50 parts by mass per 100 parts by mass of the rubber component, and
   wherein the carbon black has a nitrogen adsorption specific surface area (N₂SA) of 30 to 55 m²/g.
[2] The hose rubber composition according to [1], wherein a weight-average molecular weight of the chloroprene rubber is 20×10⁴ to 40×10⁴.
[3] The hose rubber composition according to [1] or [2], wherein the content of the chloroprene rubber is 90 parts by mass or less per 100 parts by mass of the rubber component.
[4] The hose rubber composition according to any one of [1] to [3], wherein the rubber component further includes butadiene rubber.
[5] The hose rubber composition according to any one of [1] to [4], wherein the composition is used for an intermediate layer of a hose.
[6] A hose having an intermediate layer made of the hose rubber composition according to any one of [1] to [5].

### (Advantageous Effect)

According to the present disclosure, it is possible to provide a hose rubber composition excellent in processability, crack growth resistance, and elongation fatigue resistance. Further, according to the present disclosure, it is possible to provide a hose including such a hose rubber composition and exhibiting excellent crack growth resistance and elongation fatigue resistance.

### BRIEF DESCRIPTION OF THE DRAWINGS

In the accompanying drawings:

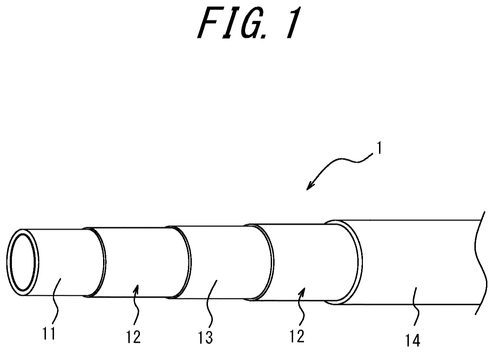

FIG. 1 is a perspective view schematically illustrating a hose according to one embodiment of the present disclosure.

### DETAILED DESCRIPTION

Hereinafter, the hose rubber composition of the present disclosure and a hose including the hose rubber composition will be exemplified and described in detail based on embodiments thereof.

### (Definitions)

The compounds disclosed herein may be partially or completely derived from fossil resources, biological resources such as plant resources, or recyclable resources such as end-of-life tires. They may also be derived from mixtures of two or more of fossil resources, biological resources and recyclable resources.

In the present specification, when a numerical range is described as "A to B," it means that the endpoints "A" and "B" are also included within the numerical range.

### (Rubber Composition)

The hose rubber composition of the present embodiment (hereinafter, sometimes simply referred to as "rubber composition") is a hose rubber composition comprising a rubber component including at least chloroprene rubber and carbon black,
wherein the content of the chloroprene rubber is 70 parts by mass or more per 100 parts by mass of the rubber component,
the chloroprene rubber has a Mooney viscosity of 43 to 53M and a crystallization initiation time at 0°C of 30 to 500 minutes,
the content of the carbon black is 40 parts by mass or more and less than 50 parts by mass per 100 parts by mass of the rubber component, and
the carbon black has a nitrogen adsorption specific surface area (N₂SA) of 30 to 55 m²/g.

The hose rubber composition of the present disclosure can be made into a rubber composition excellent in processability, crack growth resistance, and elongation fatigue resistance by combining the above-specified chloroprene rubber and carbon black.

Hereinafter, the components constituting the hose rubber composition of the present disclosure will be described.

### [Rubber Component]

The hose rubber composition of the present disclosure includes a rubber component.

The rubber component of the present embodiment includes chloroprene rubber (CR), and may further include other rubber components. As the other rubber components, rubbers containing butadiene units other than chloroprene rubber can be included.

### (Chloroprene Rubber)

The hose rubber composition of the present disclosure includes chloroprene rubber as the rubber component.

The content of the chloroprene rubber is 70 parts by mass or more per 100 parts by mass of the rubber component. When the content of the chloroprene rubber is 70 parts by mass or more per 100 parts by mass of the rubber component, the elongation fatigue resistance and oil resistance of the rubber composition are improved. From the viewpoint of elongation fatigue resistance and oil resistance, the content of the chloroprene rubber is preferably 75 parts by mass or more, more preferably 77 parts by mass or more, still more preferably 80 parts by mass or more, and particularly preferably 83 parts by mass or more, per 100 parts by mass of the rubber component. From the viewpoint of low-temperature performance, the content of the chloroprene rubber is preferably 90 parts by mass or less, more preferably 88 parts by mass or less, and particularly preferably 87 parts by mass or less, per 100 parts by mass of the rubber component. When the content of the chloroprene rubber is 90 parts by mass or less per 100 parts by mass of the rubber component, a hose rubber composition excellent in low-temperature performance can be obtained while maintaining elongation fatigue resistance.

The chloroprene rubber has a Mooney viscosity of 43 to 53M. When the Mooney viscosity is within the range of 43 to 53M, the processability of the rubber composition is improved. From the same viewpoint, the Mooney viscosity of the chloroprene rubber is preferably 44 to 52M, more preferably 45 to 51M, still more preferably 46 to 50M, and even more preferably 47 to 50M.

In the present specification, the Mooney viscosity of the chloroprene rubber is measured at 100°C using a Mooney viscometer (manufactured by Toyo Seiki Co., Ltd.) in accordance with JIS K6300-1.

The crystallization initiation time of the chloroprene rubber at 0°C is 30 to 500 minutes. When the crystallization initiation time of the chloroprene rubber is within this range, the processability and productivity of the rubber composition are improved. From the same viewpoint, the crystallization initiation time of the chloroprene rubber is preferably 35 to 400 minutes, more preferably 35 to 300 minutes, still more preferably 40 to 200 minutes, and even more preferably 45 to 150 minutes.

The crystallization initiation time at 0°C refers to the time at which crystallization of the chloroprene rubber begins at 0°C.

In the present specification, the crystallization initiation time of the chloroprene rubber is measured by isothermal crystallization measurement using a differential scanning calorimeter (manufactured by TA Instruments) in accordance with JIS K7121.

The weight-average molecular weight (Mw) of the chloroprene rubber is preferably 20×10⁴ to 40×10⁴. When the weight-average molecular weight (Mw) of the chloroprene rubber is within this range, both the processability and durability of the rubber composition are improved. From the viewpoint of processability and durability, the weight-average molecular weight of the chloroprene rubber in the present embodiment is preferably 23×10⁴ to 40×10⁴, more preferably 25×10⁴ to 40×10⁴, and still more preferably 27×10⁴ to 39×10⁴.

In the present specification, the weight-average molecular weight (Mw) of the chloroprene rubber is measured by molecular weight measurement using gel permeation chromatography (GPC).

### (Other Rubber Components)

The hose rubber composition of the present disclosure may further include rubber components other than chloroprene rubber. As the rubber components other than chloroprene rubber, rubbers containing butadiene units can be included, and are not limited thereto; for example, butadiene rubber (BR), styrene-butadiene rubber (SBR), acrylonitrile-butadiene rubber (NBR), or modified products thereof can be used. These other rubber components may be used alone or in combination of two or more.

The rubber components other than chloroprene rubber are not particularly limited, but are preferably rubber components excellent in low-temperature performance. In this case, the rubber composition becomes excellent in low-temperature performance in addition to crack growth resistance and elongation fatigue resistance.

It is preferable that the rubber components other than chloroprene rubber include butadiene rubber. By further including butadiene rubber in the rubber composition, a rubber composition excellent in low-temperature performance in addition to crack growth resistance and elongation fatigue resistance can be obtained.

The content of the butadiene rubber is preferably 10 to 30 parts by mass, more preferably 10 to 25 parts by mass, and still more preferably 10 to 20 parts by mass, per 100 parts by mass of the rubber component.

### [Carbon Black]

The hose rubber composition of the present disclosure includes carbon black. The carbon black can reinforce the rubber composition and improve the crack growth resistance and elongation fatigue resistance of the rubber composition.

The content of the carbon black is 40 parts by mass or more and less than 50 parts by mass per 100 parts by mass of the rubber component. When the content of the carbon black is within this range, the rubber composition has high reinforcing properties and is excellent in crack growth resistance and elongation fatigue resistance. From the viewpoint of reinforcing properties, the content of the carbon black is preferably 41 parts by mass or more, more preferably 42 parts by mass or more, and even more preferably 43 parts by mass, per 100 parts by mass of the rubber component. From the viewpoint of elongation fatigue resistance, the content of the carbon black is preferably 49 parts by mass or less, more preferably 48 parts by mass or less, still more preferably 46 parts by mass or less, and even more preferably 44 parts by mass or less, per 100 parts by mass of the rubber component.

Further, the nitrogen adsorption specific surface area (N₂SA) of the carbon black is 30 to 55 m²/g. When the nitrogen adsorption specific surface area (N₂SA) of the carbon black is 30 to 55 m²/g, the rubber composition has high reinforcing properties and is excellent in crack growth resistance and elongation fatigue resistance. From the same viewpoint, the nitrogen adsorption specific surface area (N₂SA) of the carbon black is preferably 33 to 52 m²/g, more preferably 35 to 50 m²/g, and still more preferably 38 to 47 m²/g.

As the carbon black, for example, FEF grade carbon black can be mentioned, but any grade of carbon black that satisfies the nitrogen adsorption specific surface area of the present embodiment can be used. These carbon blacks may be used alone or in combination of two or more.

In the present specification, the nitrogen adsorption specific surface area (N₂SA) of the carbon black is measured in accordance with JIS K6217-2.

### (Other Components)

The hose rubber composition of the present disclosure may further contain various compounding agents in addition to the rubber component and carbon black. Examples of such compounding agents include fillers other than carbon black, softeners, vulcanizing agents (crosslinking agents), vulcanization accelerators, vulcanization accelerator aids, antioxidants, vulcanization retarders, waxes, foaming agents, oils, lubricants, tackifiers, ultraviolet absorbing agents, dispersants, compatibilizing agents, homogenizing agents, and the like. These may be used alone or in combination of two or more.

### [Filler]

The hose rubber composition of the present disclosure may further include fillers other than carbon black. By including fillers other than carbon black in the hose rubber composition, the rigidity of the hose rubber composition is improved. Examples of fillers include calcium carbonate, silica, aluminum hydroxide, alumina, clay, and the like, among which calcium carbonate and silica are preferred.

The content of the filler is not particularly limited, but is preferably 31 to 120 parts by mass, more preferably 40 to 90 parts by mass, per 100 parts by mass of the rubber component. When calcium carbonate is included as the filler, the content of calcium carbonate is preferably 30 to 100 parts by mass, more preferably 40 to 80 parts by mass, per 100 parts by mass of the rubber component. The content of silica is preferably 1 to 20 parts by mass, more preferably 5 to 15 parts by mass, per 100 parts by mass of the rubber component.

### [Softener]

The hose rubber composition of the present disclosure may further include a softener. The softener is not particularly limited, and examples include oils. The oils are not particularly limited, and various oils such as mineral oil-based, vegetable oil-based, and synthetic oils can be used. Examples of mineral oil-based oils include process oils such as naphthenic and paraffinic oils. Examples of vegetable oil-based oils include castor oil, cottonseed oil, linseed oil, rapeseed oil, soybean oil, palm oil, and the like. Examples of synthetic oils include glycerin ester compounds, adipic acid ester compounds, polyether ester compounds, phthalic acid ester compounds, isosorbide ester compounds, polycaprolactone compounds, and the like.

The content of the softener is not particularly limited, but is preferably 5 to 30 parts by mass, more preferably 10 to 20 parts by mass, per 100 parts by mass of the rubber component.

### [Vulcanizing Agent]

The hose rubber composition of the present disclosure may include a vulcanizing agent (crosslinking agent). The vulcanizing agent crosslinks the rubber component and improves the breaking strength of the rubber composition. The vulcanizing agent is not particularly limited, and examples include sulfur.

The content of the vulcanizing agent is not particularly limited, but is preferably 1 to 10 parts by mass, more preferably 2 to 7 parts by mass, and still more preferably 3 to 5 parts by mass, per 100 parts by mass of the rubber component.

### [Vulcanization Accelerator]

The hose rubber composition of the present disclosure may include a vulcanization accelerator. The vulcanization accelerator has the effect of increasing the vulcanization rate of the rubber composition. The vulcanization accelerator is not particularly limited, and examples include thiazole vulcanization accelerators such as 2-mercaptobenzothiazole (MBT) and dibenzothiazyl disulfide (MBTS); sulfenamide vulcanization accelerators such as N-cyclohexyl-2-benzothiazolesulfenamide (CZ) and N-(tert-butyl)-2-benzothiazolesulfenamide (NS); and guanidine vulcanization accelerators such as 1,3-diphenyl guanidine (DPG).

The content of the vulcanization accelerator is preferably 0.1 to 3 parts by mass, more preferably 0.5 to 2 parts by mass, and still more preferably 0.6 to 1.5 parts by mass, per 100 parts by mass of the rubber composition.

### [Vulcanization Accelerator Aid]

The hose rubber composition of the present disclosure may include a vulcanization accelerator aid. The vulcanization accelerator aid is not particularly limited, and examples include zinc oxide (zinc white).

The content of the vulcanization accelerator aid is not particularly limited, but is preferably 1 to 10 parts by mass, more preferably 3 to 7 parts by mass, and still more preferably 4 to 6 parts by mass, per 100 parts by mass of the rubber component.

### (Method for Preparing Rubber Composition)

The method for preparing the hose rubber composition of the present disclosure is not particularly limited, and a known method can be used. For example, the above components can be kneaded using a kneader such as an open roll mill, a Banbury mixer, or a kneader of a closed mixing type.

### (Hose)

An example of the laminated structure of a hose according to one embodiment of the present disclosure will be described with reference to FIG. 1. In FIG. 1, the hose 1 includes an inner tube rubber layer 11, an intermediate rubber layer 13 located radially outside the inner tube rubber layer 11, and a cover rubber layer 14 located radially outside the intermediate rubber layer 13, and further, reinforcement layers 12 are disposed between the inner tube rubber layer 11 and the intermediate rubber layer 13, and between the intermediate rubber layer 13 and the cover rubber layer 14, respectively.

It is preferable to use the rubber composition of the present disclosure for the intermediate rubber layer of the hose. By using the rubber composition of the present disclosure for the intermediate layer of the hose, a hose excellent in crack growth resistance and elongation fatigue resistance can be obtained.

The hose of the present disclosure preferably has an intermediate layer composed of the rubber composition of the present disclosure. By having an intermediate layer composed of the rubber composition of the present disclosure, a hose excellent in crack growth resistance and elongation fatigue resistance can be obtained.

The structure of the hose can be appropriately selected according to requirements, and, for example, the reinforcement layer and the intermediate rubber layer may each be composed of two or more layers. Further, the intermediate rubber layer may be located between the reinforcement layers.

The reinforcement layer is preferably formed of metal wire, and more preferably formed of brass-plated wire.

### (Method for Manufacturing Hose)

The following method can be exemplified for manufacturing the hose 1.

First, a rubber composition for the inner tube rubber layer 11 is injection-molded onto the outside of a core body (mandrel) having a diameter approximately equal to the inner diameter of the hose to cover the mandrel, thereby forming the inner tube rubber layer 11 (inner tube extrusion step). Next, on the outside of the inner tube rubber layer 11 formed in the inner tube extrusion step, a predetermined number of brass-plated wires are braided to form two layers of reinforcement layers 12 (braiding step), and a rubber sheet made of the hose rubber composition of the present disclosure is inserted and formed between the two reinforcement layers 12 to form the intermediate rubber layer 13. Further, a cover rubber layer 14 made of a rubber composition is extruded and formed (cover extrusion step).

Next, the outside of the cover rubber layer 14 formed in the cover extrusion step is covered with a suitable resin as appropriate (resin mold covering step), and this is vulcanized under predetermined conditions (vulcanization step). After vulcanization, the covering resin is peeled off (resin mold peeling step), and the mandrel is removed (mandrel extraction step), thereby obtaining a hose 1 having the reinforcement layer 12 and the intermediate rubber layer 13 between the inner tube rubber layer 11 and the cover rubber layer 14.

### EXAMPLES

Hereinafter, the present disclosure will be described in more detail with reference to examples, but the present disclosure is not limited to the following examples in any way.

### (Measurement of Physical Properties of Chloroprene Rubbers 1 and 2)

For chloroprene rubber 1 (manufactured by Tosoh Corporation, trade name "Skyprene," grade: B-30) and chloroprene rubber 2 (manufactured by Denka Co., Ltd., trade name "Denka Chloroprene," grade: DCR-36), the following physical property measurements were performed.

### (1) Mooney Viscosity

The Mooney viscosity was measured at 100°C using a Mooney viscometer (manufactured by Toyo Seiki Co., Ltd.) in accordance with JIS K6300-1. After preheating for 1 minute at 100°C, the torque value after 4 minutes was measured in Mooney units. The smaller the Mooney viscosity value, the lower the unvulcanized viscosity; the larger the value, the harder the material.

The measured results were 49M for chloroprene rubber 1 and 80M for chloroprene rubber 2.

### (2) Crystallization Initiation Time

The crystallization initiation time was measured by isothermal crystallization measurement at 0°C using a differential scanning calorimeter (DSC, manufactured by TA Instruments) in accordance with JIS K7121.

The measured results were 120 minutes for chloroprene rubber 1 and 3000 minutes for chloroprene rubber 2.

### (3) Weight-Average Molecular Weight

The weight-average molecular weight (Mw) was determined by gel permeation chromatography [GPC: HLC-8020 manufactured by Tosoh Corporation, column: GMH-XL manufactured by Tosoh, detector: differential refractometer (RI)] using standard polystyrene manufactured by Tosoh as a reference.

The measured results were 39×10⁴ for chloroprene rubber 1 and 57×10⁴ for chloroprene rubber 2.

### (Preparation and Evaluation of Rubber Composition)

Each component indicated in Table 1 was charged into an internal mixer and kneaded to prepare a rubber composition. The obtained rubber composition was evaluated by the following methods. The evaluation results are presented in Table 1.

### (1) Evaluation of Processability

For each sample of the Examples and Comparative Examples, after the unvulcanized rubber composition was preheated at 127°C for 1 minute, the torque value after 4 minutes was measured in Mooney units using a rotorless Mooney viscometer (manufactured by Toyo Seiki Co., Ltd.) in accordance with JIS K6300-1.

The smaller the value, the better the processability, such as kneading and extrusion.

### (2) Evaluation of Sheet Breakage

For each sample of the Examples and Comparative Examples, the unvulcanized rubber composition was formed into a sheet using rolls, and a tensile test was conducted at room temperature in accordance with JIS K6251 to measure the 100% deformation modulus.

The larger the value, the better the prevention of sheet breakage during winding.

### (3) Evaluation of Elongation Fatigue Resistance (Number of Breaks)

As an index of elongation fatigue resistance, the number of breaks was measured.

For each sample of the Examples and Comparative Examples, after vulcanization treatment was performed, a DIN No. 3 test piece was subjected to repeated 200% elongation at 2.5 Hz using a tensile testing machine (manufactured by Orientec Co., Ltd.). The value indicates the number of elongations at which the test piece broke.

The larger the value, the better the elongation fatigue resistance.

The values in Table 1 are the averages of two measurements.

### (4) Evaluation of Crack Growth Resistance (number of De Mattia bending operations)

As an index of crack growth resistance, the number of De Mattia bending operations was measured.

For each sample of the Examples and Comparative Examples, after vulcanization treatment, a straight 2.5 mm notch was made in the center of a test piece of 140 × 25 × 6.3 mm. The number of bending operations at 35°C was measured using a De Mattia type flexing tester (manufactured by Ueshima Seisakusho Co., Ltd.) in accordance with JIS K6260. The value indicates the number of bending operations when the length of the crack along the long side of the test piece reached 20 mm.

The larger the value, the better the crack growth resistance.

The values in Table 1 are the averages of two measurements.

**[Table 1]**

| | | | Example 1 | Example 2 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|
| Formulation of rubber composition | Butadiene rubber *1 | prts. by mass | 15 | 15 | 15 | 15 | 15 | 15 | 15 | 15 |
| | Chloroprene rubber 1 *2 | prts. by mass | 85 | 85 | 30 | 30 | 30 | 30 | 85 | 85 |
| | Chloroprene rubber 2 *3 | prts. by mass | - | - | 55 | 55 | 55 | 55 | - | - |
| | Carbon black 1 *4 | prts. by mass | 40 | 45 | - | 40 | 45 | 50 | - | 50 |
| | Carbon black 2 *5 | prts. by mass | - | - | 60 | - | - | - | 60 | - |
| | Calcium carbonate *6 | prts. by mass | 60 | 60 | 60 | 60 | 60 | 60 | 60 | 60 |
| | Silica *7 | prts. by mass | 10 | 10 | 10 | 10 | 10 | 10 | 10 | 10 |
| | Oil *8 | prts. by mass | 15 | 15 | 15 | 15 | 15 | 15 | 15 | 15 |
| | Sulfur *9 | prts. by mass | 3.2 | 3.2 | 3.2 | 3.2 | 3.2 | 3.2 | 3.2 | 3.2 |
| | Vulcanization accelerator *10 | prts. by mass | 0.8 | 0.8 | 0.8 | 0.8 | 0.8 | 0.8 | 0.8 | 0.8 |
| | Zinc oxide *11 | prts. by mass | 4.8 | 4.8 | 4.8 | 4.8 | 4.8 | 4.8 | 4.8 | 4.8 |
| Physical properties of unvulcanized rubber | Evaluation of processability (rotorless Mooney) | M | 52.3 | 57.5 | 73.3 | 68.5 | 74.8 | 83.1 | 55.0 | 64.5 |
| | Evaluation of Sheet breakage (100% green modulus) | MPa | 0.47 | 0.59 | 0.50 | 0.37 | 0.56 | 0.73 | 0.60 | 1.02 |
| Physical properties of vulcanized rubber | Evaluation of elongation fatigue resistance (number of breaks) | number | 6147 | 5491 | 5242 | 5088 | 4981 | 5202 | 2302 | 2462 |
| | Evaluation of crack growth resistance (number of De Mattia type bending operations) | number | 15750 | 9000 | 12750 | 16250 | 4500 | 2250 | 7500 | 3750 |

| | | | | | | | | | | |
|---|---|---|---|---|---|---|---|---|---|---|
| *1: Butadiene rubber: manufactured by JSR Corporation, trade name "SBR#1500" *2: Chloroprene rubber 1: manufactured by Tosoh Corporation, trade name "Skyprene," grade: B-30, Mooney viscosity at 100°C = 49M, crystallization initiation time at 0°C = 120 minutes, weight-average molecular weight (Mw) = 39×10⁴ *3: Chloroprene rubber 2: manufactured by Denka Co., Ltd., trade name "Denka Chloroprene," grade: DCR-36, Mooney viscosity at 100°C = 80M, crystallization initiation time at 0°C = 3000 minutes, weight-average molecular weight (Mw) = 57×10⁴ *4: Carbon black 1: FEF grade carbon black, manufactured by Tokai Carbon Co., Ltd., trade name "SEAST F," nitrogen adsorption specific surface area (N₂SA): 45 m²/g *5: Carbon black 2: SRF grade carbon black, manufactured by Asahi Carbon Co., Ltd., trade name "#50," nitrogen adsorption specific surface area (N₂SA): 28 m²/g *6: Calcium carbonate: manufactured by Nitto Funka Co., Ltd., trade name "NS#100" *7: Silica: manufactured by Tosoh Corporation, trade name "Nipsil AQ" *8: Oil: manufactured by JXTG Nippon Oil & Energy Corporation, trade name "Super Oil Y22" *9: Sulfur: manufactured by Tsurumi Chemical Industry Co., Ltd., trade name "Sulfax 5" *10: Vulcanization accelerator: manufactured by Ouchi Shinko Chemical Industrial Co., Ltd., trade name "Nocceler NS-F" *11: Zinc oxide: manufactured by Hakusui Tech Co., Ltd., trade name "No. 3 zinc oxide" | | | | | | | | | | |

The rubber compositions of Examples 1 and 2, in which chloroprene rubber and carbon black satisfying the prescribed conditions were combined, exhibited excellent rotorless Mooney, number of breaks, and number of De Mattia bending operations, and it can be seen that they were superior in all of processability, crack growth resistance, and elongation fatigue resistance. On the other hand, although either of processability, crack growth resistance, or elongation fatigue resistance of the rubber compositions of the Comparative Examples was equivalent to Examples 1 and 2, not all of processability, crack growth resistance, and elongation fatigue resistance were superior, and it can be seen that the results were inferior compared to Examples 1 and 2.

### INDUSTRIAL APPLICABILITY

According to the present disclosure, it is possible to provide a hose rubber composition excellent in processability, crack growth resistance, and elongation fatigue resistance. In addition, it is possible to provide a hose including such a hose rubber composition and exhibiting excellent crack growth resistance and elongation fatigue resistance.

### REFERENCE SIGNS LIST

1: hose
11: inner tube rubber layer
12: reinforcement layer
13: intermediate rubber layer
14: outer rubber layer

## Claims

1. A hose rubber composition comprising a rubber component including at least chloroprene rubber and carbon black,
wherein a content of the chloroprene rubber is 70 parts by mass or more per 100 parts by mass of the rubber component,
wherein the chloroprene rubber has a Mooney viscosity of 43 to 53M and a crystallization initiation time at 0°C of 30 to 500 minutes,
wherein a content of the carbon black is 40 parts by mass or more and less than 50 parts by mass per 100 parts by mass of the rubber component, and
wherein the carbon black has a nitrogen adsorption specific surface area (N₂SA) of 30 to 55 m²/g.

2. The hose rubber composition according to claim 1, wherein a weight-average molecular weight of the chloroprene rubber is 20×10⁴ to 40×10⁴.

3. The hose rubber composition according to claim 1, wherein the content of the chloroprene rubber is 90 parts by mass or less per 100 parts by mass of the rubber component.

4. The hose rubber composition according to claim 1, wherein the rubber component further includes butadiene rubber.

5. The hose rubber composition according to claim 1, wherein the composition is used for an intermediate layer of a hose.

6. A hose having an intermediate layer made of the hose rubber composition according to claim 1.
